# EUROPÄISCHE PATENTSCHRIFT

(11) **EP 4 128 023 B1**
(45) Veröffentlichungstag und Bekanntmachung des Hinweises auf die Patenterteilung: **01.07.2026**
(21) Anmeldenummer: 21716708.9
(22) Anmeldetag: 01.04.2021
(51) Int. Cl.: G06F 18/2413, G06V 20/56, G06V 20/64

(54) **VERFAHREN UND VORRICHTUNG ZUM ERMITTELN UND KLASSIFIZIEREN WENIGSTENS EINES OBJEKTS IN EINEM ERFASSUNGSBEREICH EINES SENSORS**
METHOD AND DEVICE FOR DETECTING AND CLASSIFYING AT LEAST ONE OBJECT IN A DETECTION AREA OF A SENSOR
PROCÉDÉ ET DISPOSITIF POUR DÉTECTER ET CLASSER AU MOINS UN OBJET DANS UNE ZONE DE DÉTECTION D'UN CAPTEUR

(30) Priorität: 03.04.2020 DE 102020109364
(43) Veröffentlichungstag der Anmeldung: 08.02.2023
(73) Patentinhaber: CARIAD SE, 38440 Wolfsburg (DE)
(72) Erfinder: SCHUMANN, Martin, 12524 Berlin (DE)
(74) Vertreter: Hofstetter, Schurack & Partner
(86) Internationale Anmeldenummer: PCT/EP2021/058667
(87) Internationale Veröffentlichungsnummer: WO 2021/198446

(56) Entgegenhaltungen:
- US-A1- 2018 173 971
- MICHAELIS CLAUDIO ET AL: "One-Shot Instance Segmentation", ARXIV.ORG, 28 May 2019 (2019-05-28), pages 1 - 20, XP055799800
- LIN TSUNG-YI ET AL: "Microsoft COCO: Common Objects in Context", ADVANCES IN INTELLIGENT DATA ANALYSIS XIX; [LECTURE NOTES IN COMPUTER SCIENCE; LECT.NOTES COMPUTER], 31 December 2014 (2014-12-31), pages 740 - 755, XP047529588

## Beschreibung

Die Erfindung betrifft ein Verfahren zum Ermitteln und Klassifizieren wenigstens eines Objekts in einem Erfassungsbereich eines Sensors. Die Erfindung betrifft ferner eine Vorrichtung zum Ermitteln und Klassifizieren wenigstens eines Objekts in einem Erfassungsbereich eines Sensors. Die Erfindung wird in den angehängten Ansprüchen definiert.

Insbesondere im Bereich des autonomen Fahrens und bei Fahrassistenzsystemen sollen Sensordaten von Bildern, die durch einen an einem Fahrzeug befestigten Sensor, beispielsweise eine Kamera, einen Lidar-Sensor oder einen Radar-Sensor, erfasst wurden, verarbeitet werden, um ein Objekt in einem Erfassungsbereich des Sensors zu detektieren und zu klassifizieren. Dies erfolgt insbesondere unter Verwendung eines Maschinenlernverfahrens, insbesondere eines neuronalen Netzwerks. Damit es möglich ist, das Objekt mittels des Maschinenlernverfahrens zu klassifizieren, muss das Maschinenlernverfahren unter Verwendung eines Trainingsdatensatzes trainiert worden sein. Ein solcher Trainingsdatensatz umfasst üblicherweise eine Vielzahl von Bildern weiterer Objekte und die Objektklasse des jeweiligen Objekts. Übliche Maschinenlernverfahren können nur entscheiden, ob das zu klassifizierende Objekt einer Objektklasse angehört, die aus dem Trainingsdatensatz bekannt ist.

Aus dem Dokument Michaelis et al., One-Shot Instance Segmentation, ar-Xiv:1811.11507v2, ist ein Verfahren zum Segmentieren eines Bildes bekannt, d.h. zum Erzeugen von inhaltlich zusammenhängenden Regionen des Bildes. Bei dem Verfahren wird das Bild mithilfe einer Vorlage unter Verwendung eines neuronalen Netzwerks segmentiert.

Aus dem Dokument Bonde et al., TemplateNet for Depth-Based Object Instance Recognition, arXiv:1511.03244v1, ist ferner ein Verfahren zum Erkennen von Objekten in Bildern bekannt. Das Verfahren verwendet ein neuronales Netzwerk mit einer zwischen-geschalteten Vorlageschicht.

Es ist Aufgabe der Erfindung, ein Verfahren und eine Vorrichtung zum Ermitteln und Klassifizieren wenigstens eines Objekts in einem Erfassungsbereich eines Sensors anzugeben, die eine schnelle und zuverlässige Klassifikation des Objekts erlauben.

Diese Aufgabe wird durch ein Verfahren mit den Merkmalen des Anspruchs 1 und durch eine Vorrichtung mit den Merkmalen des unabhängigen Vorrichtungsanspruchs gelöst. Vorteilhafte Weiterbildungen sind in den abhängigen Ansprüchen angegeben.

Bei dem Verfahren nach Anspruch 1 wird mittels des Sensors ein zwei- oder dreidimensionales Bild des Erfassungsbereichs erfasst. Es werden dem Bild entsprechende Sensordaten erzeugt. Mittels der Sensordaten und mittels erster Vorlagedaten zumindest eines ersten Vorlageobjekts wird das Objekt unter Verwendung eines neuronalen Netzwerks in dem Bild ermittelt. Das neuronale Netzwerk ist unter Verwendung der ersten Vorlagedaten trainiert worden. Die ersten Vorlagedaten entsprechen einem Bild des ersten Vorlageobjekts. Dem ersten Vorlageobjekt ist zumindest eine erste Objektklasse zugeordnet. Das Objekt wird klassifiziert, indem das neuronale Netzwerk ermittelt, ob das Objekt der ersten Objektklasse oder nicht der ersten Objektklasse zuzuordnen ist.

Unter dreidimensionalen Bildern werden in der vorliegenden Anmeldung Punktwolken oder Höhenkarten verstanden.

Zunächst wird das neuronale Netzwerk mittels der ersten Vorlagedaten trainiert. Hierzu werden dem neuronalen Netzwerk zumindest die ersten Vorlagedaten eingegeben. Zum Ermitteln und Klassifizieren des Objekts in dem Erfassungsbereich werden dem trainierten neuronalen Netzwerk die Sensordaten eingegeben. Zusätzlich werden dem neuronalen Netzwerk die ersten Vorlagedaten als eine Referenz, ein sogenanntes Template, für die ersten Objektklasse eingegeben.

Auf Grundlage der eingegebenen Daten entscheidet das neuronale Netzwerk, ob das zu klassifizierende Objekt derselben Objektklasse wie das erste Vorlageobjekt zuzuordnen ist oder nicht. Hierdurch wird das zu klassifizierende Objekt klassifiziert. Die Klassifikation mittels der ersten Vorlagedaten erfolgt hierbei wesentlich schneller und zuverlässiger als bei bekannten neuronalen Netzwerken, da durch die Verwendung der ersten Vorlagedaten die Freiheitsgrade des neuronalen Netzwerks verringert werden können.

Es versteht sich von selbst, dass das Training des neuronalen Netzwerks für eine Viel-zahl erster Vorlagedaten wiederholt werden kann. Die Vielzahl erster Vorlagedaten entspricht dabei Bildern von ersten Vorlageobjekten, die jeweils verschiedenen Objekt-klassen zugeordnet sind.

In einer bevorzugten Ausführungsform werden mittels der Sensordaten und mittels zweiter Vorlagedaten eines zweiten Vorlageobjekts unter Verwendung eines neuronalen Netzwerks das Objekt in dem Bild ermittelt. Die zweiten Vorlagedaten entsprechen einem Bild des zweiten Vorlageobjekts, dem zumindest eine zweite Objektklasse zugeordnet ist. Das Objekt wird klassifiziert, indem das neuronale Netzwerk ermittelt, ob das Objekt der zweiten Objektklasse zuzuordnen ist oder nicht der zweiten Objektklasse zuzuordnen ist. In dieser Ausführungsform ist das neuronale Netzwerk mittels der ersten Vorlagedaten trainiert worden, anhand von zweiten von den ersten Vorlagedaten verschiedenen Vorlagedaten zu ermitteln, ob das zu klassifizierende Objekt der zweiten Objektklasse zuzuordnen ist oder nicht. Das neuronale Netzwerk ist folglich in der Lage, anhand beliebiger Vorlagedaten, die dem neuronalen Netzwerk als Template eingegeben werden, zu entscheiden, ob das zu klassifizierende Objekt derselben Objektklasse angehört, wie das den jeweiligen Vorlagedaten entsprechende Vorlageobjekt. Somit ist es dem neuronalen Netzwerk möglich insbesondere zu ermitteln, ob das Objekt einer Objektklasse angehört, die dem neuronalen Netzwerk nicht aus dem Training bekannt ist. Mit anderen Worten: Das neuronale Netzwerk kann mit Hilfe der zweiten Vorlagedaten ein Objekt identifizieren, das dem neuronalen Netzwerk nicht aus dem Training bekannt ist. Dies verringert den Aufwand für das Training des neuronalen Netzwerks immens. Insbesondere muss das neuronale Netzwerk nicht neu trainiert werden, sollen weitere Objektklassen identifiziert werden. Es genügt die Bereit-stellung weiterer zweiter Vorlagedaten.

Die Klassifikation des Objekts unter Verwendung des trainierten neuronalen Netzwerks kann insbesondere für eine Vielzahl erster und/oder zweiter Vorlagedaten erfolgen. Die Vielzahl erster und/oder zweiter Vorlagedaten entspricht dabei jeweils Bildern von ersten bzw. zweiten Vorlageobjekten, die jeweils verschiedenen Objektklassen zugeordnet sind. Dies bedeutet, dass dem neuronalen Netzwerk zusammen mit den Sensordaten mehr als ein Template als Referenz eingegeben wird, um das Objekt zu klassifizieren. Zum Ermitteln und Klassifizieren des Objekts können dem trainierten neuronalen Netzwerk beispielsweise die Sensordaten und eine Teilmenge einer Vielzahl erster und/oder zweiter Vorlagedaten eingegeben werden, die einem Bild eines ersten bzw. zweiten Vorlageobjekts entspricht. Dieser Schritt wird wiederholt, bis dem neuronalen Netzwerk alle Teilmengen der Vielzahl erster und/oder zweiter Vorlagedaten eingegeben worden sind, die den Bildern der ersten bzw. zweiten Vorlageobjekte entsprechen. Insbesondere können dem neuronalen Netzwerk aber auch die Vielzahl erster und/oder zweiter Vorlagedaten gleichzeitig mit den Sensordaten eingegeben werden. Auf diese Weise kann in einem Durchlauflauf entschieden werden, ob das zu klassifizierende Objekt einer der verschiedenen Objektklassen zugeordnet werden kann oder nicht.

In einer weiteren bevorzugten Ausführungsform wurde das neuronale Netzwerk unter Verwendung der ersten Vorlagedaten und einer Vielzahl von Trainingssensordaten trainiert. Die Trainingssensordaten sind Bilder von weiteren Objekten entsprechen, die zumindest der ersten Objektklasse zugeordnet sind. Alternativ oder zusätzlich sind die Trainingssensordaten Bilder von weiteren Objekten, die nicht der ersten Objektklasse zugeordnet sind. In einer weiteren bevorzugten Ausführungsform erfolgt das Training, in dem Parameter des neuronalen Netzwerks solange verändert werden, bis jede Eingabe der Trainingssensordaten und der ersten Vorlagedaten in das neuronale Netzwerk die erwartete Ausgabe durch das neuronale Netzwerk zu Folge hat, d.h. die korrekte Klassifikation der Trainingssensordaten. Alternativ kann auch eine Untergrenze, beispielsweise 99%, von Eingaben von Trainingssensordaten festgelegt werden, die eine erwartete Ausgabe durch das neuronale Netzwerk zu Folge hat, um zu ermitteln, ob das Training abgeschlossen ist. Für die Veränderung der Parameter des neuronalen Netzwerks sind aus dem Stand der Technik Algorithmen bekannt, beispielsweise Back-propagation. Das Training kann insbesondere in einem überwachten Lernen oder einen unüberwachten Lernen bestehen.

Es ist vorteilhaft, wenn jedem Vorlageobjekt genau eine der Objektklassen zugeordnet ist. Hierdurch wird dem zu klassifizierenden Objekt höchstens eine Objektklasse zugeordnet. Somit ist eine eindeutige Klassifikation des Objekts gewährleistet. Alternativ sind jedem Vorlageobjekt mehr als eine Objektklasse zugeordnet. Diese Objektklassen sind insbesondere aufeinander bezogen. Insbesondere sind die Objektklassen hierarchisch geordnet, beispielsweise von der allgemeinsten Objektklasse zu der speziellsten Objektklasse. Ist beispielsweise das Vorlageobjekt ein Fahrzeug eines bestimmten Typs und einer bestimmten Baureihe, können die diesem Vorlageobjekt zugeordneten Objektklassen Fahrzeug, der bestimmte Typ und die bestimmte Baureihe sein.

Es ist vorteilhaft, wenn keine Objektklasse mehr als einem Vorlageobjekt zugeordnet ist. Sind einem oder mehreren Vorlageobjekten mehr als eine Objektklasse zugeordnet, ist es vorteilhaft, wenn keine Kombination von Objektklassen mehr als einem Vorlage-objekt zugeordnet ist. Hierdurch existiert für jede Objektklasse oder Kombination von Objektklassen ein einziges Vorlageobjekt. Dies erlaubt eine eindeutige Klassifikation des Objekts.

Es ist vorteilhaft, wenn mittels der Sensordaten und mittels der ersten Vorlagedaten oder der zweiten Vorlagedaten unter Verwendung des neuronalen Netzwerks ein Bildbereich ermittelt wird, der ein Teilbereich des Bildes ist und eine Abbildung des Objekts umfasst. Hierdurch wird das Bild segmentiert, d.h. inhaltlich zusammenhängende Bildbereiche werden als der Teilbereich weiterverarbeitet. Dies vereinfacht die darauffolgende Klassifizierung des Objekts, da zu dieser nur Bilddaten verwendet werden, die dem Objekt zugeordnet sind. Somit kann die Klassifizierung einfacher und zuverlässiger durchgeführt werden.

In einer weiteren bevorzugten Ausführungsform ist der Sensor eine Kamera, insbesondere eine Monokamera, oder ein Lidar-Sensor oder ein Radar-Sensor. Eine Monokamera ist eine Kamera, die nur ein einziges Objektiv aufweist und nur nichtstereoskopische Bilder erfassen kann. Mittels des Lidar-Sensors oder des Radar-Sensors wird eine Höhenkarte oder eine Punktwolke des Erfassungsbereichs erfasst, die ein dreidimensionales Bild des Erfassungsbereichs ist. Der Sensor könnte auch mehrere Kameras umfassen.

In einer weiteren bevorzugten Ausführungsform kann das Fahrzeug mehrere Sensoren aufweisen, wie eine oder mehrere Kameras und/oder einen oder mehrere Lidar-Sensoren und/oder einen oder mehrere Radar-Sensoren.

In einer weiteren bevorzugten Ausführungsform ist der Sensor ein Sensor eines Fahrzeugs, insbesondere eines Straßenfahrzeugs. In dieser Ausführungsform wird das Ver-fahren zum Erfassen und Klassifizieren des Objekts in dem Erfassungsbereich, der sich beispielsweise vor oder hinter dem Fahrzeug befindet, mittels des Sensors des Fahr-zeugs genutzt. Die robuste Klassifikation des Objekts durch das Verfahren und die Möglichkeit, ohne erneutes Training des neuronalen Netzwerks neue Objektklassen zu implementieren, sind für den Einsatz im Straßenverkehr vorteilhaft.

Vorzugsweise wird die dem zu klassifizierenden Objekt zugeordnete Objektklasse als Eingabe für ein Fahrassistenzsystem oder eine Steuereinheit zum autonomen Steuern des Fahrzeugs verwendet. Beispielsweise kann die Objektklasse dazu genutzt werden, zu entscheiden, ob das Fahrzeug das Objekt gefahrlos ignorieren kann, ob das Fahrzeug das Objekt umfahren muss oder ob das Fahrzeug einen Bremsvorgang einleiten muss. Alternativ oder zusätzlich kann das Fahrassistenzsystem einen Hinweis auf das Objekt oder eine Warnung ausgeben, wenn von dem Objekt eine Gefahr für das Fahrzeug aus-geht.

In einer weiteren bevorzugten Ausführungsform wird mittels der Bilddaten und der dem zu klassifizierenden Objekt zugeordneten Objektklasse die Position des Objekts relativ zu dem Fahrzeug ermittelt. Hierzu werden beispielsweise Höhe, Breite und/oder die Länge des Objekts mittels der Objektklasse ermittelt. Durch Vergleichen der Abmessungen des Objekts mit der Größe der Abbildung des Objekts kann die Entfernung zwischen dem Objekt und dem Fahrzeug ermittelt werden. In dieser Ausführungsform erlaubt es, das Verfahren somit besonders einfach und insbesondere nur mit einer Monokamera durchführen und die Größe des Objekts in dem Erfassungsbereich vor bzw. hinter dem Fahrzeug zu ermitteln.

Die Erfindung betrifft ferner eine Vorrichtung zum Ermitteln und Klassifizieren wenigstens eines Objekts in einem Erfassungsbereich eines Sensors. Der Sensor ist ausgebildet ein zwei- oder dreidimensionales Bild des Erfassungsbereichs zu erfassen. Die Vorrichtung umfasst ferner eine Bildverarbeitungs- und Auswerteeinheit, die ausgebildet ist, dem Bild entsprechende Sensordaten zu erzeugen, und mittels der Sensordaten und mittels erster Vorlagedaten eines ersten Vorlageobjekts unter Verwendung eines neuronalen Netzwerks das Objekt in dem Bild zu ermitteln. Das neuronale Netzwerk ist unter Verwendung der ersten Vorlagedaten trainiert worden. Die ersten Vorlagedaten entsprechen einem Bild des ersten Vorlageobjekts. Dem ersten Vorlageobjekt ist zumindest eine erste Objektklasse zugeordnet. Das Objekt wird klassifiziert, indem das neuronale Netzwerk ermittelt, ob das Objekt der ersten Objektklasse oder nicht der ersten Objektklasse zuzuordnen ist.

Die Vorrichtung hat dieselben Vorteile wie das beanspruchte Verfahren und kann auf die gleiche Weise, insbesondere mit den Merkmalen der anhängigen Ansprüche, weitergebildet werden.

In einer bevorzugten Ausführungsform ist der Sensor eine Kamera, insbesondere eine Monokamera, und/oder ein Lidar-Sensor und/oder ein Radar-Sensor. Monokameras sind kostengünstiger als vergleichbare Stereokameras. Zudem erfordern Monokamera keine aufwendige Kalibrierung. Durch die Verwendung einer Monokamera ist die Vorrichtung somit insbesondere kostengünstiger herstellbar und hat einen geringen Wartungsaufwand.

In einer weiteren bevorzugten Ausführungsform ist der Sensor fest mit einem Fahrzeug, insbesondere einem Straßenfahrzeug, verbunden. Hierdurch ist insbesondere nur eine einmalige Kalibrierung des Sensors erforderlich.

Weitere Merkmale und Vorteile ergeben sich aus der folgenden Beschreibung, die eine Ausführungsform in Verbindung mit den beigefügten Figuren näher erläutert.

Es zeigen:
- Figur 1: ein Fahrzeug mit einer Vorrichtung zum Ermitteln und Klassifizieren eines Objekts in einem Erfassungsbereich vor dem Fahrzeug mittels eines Sensors des Fahrzeugs;
- Figur 2: ein Flussdiagramm eines Ablaufs zum Ermitteln und Klassifizieren des Objekts in dem Erfassungsbereich;
- Figur 3: eine schematische Darstellung eines neuronalen Netzwerks;
- Figur 4: eine schematische Darstellung des Trainings des neuronalen Netzwerks;
- Figur 5: schematisch einen Ablauf zum Ermitteln und Klassifizieren des Objekts unter Verwendung des neuronalen Netzwerks nach einer Ausführungsform;
- Figur 6: eine schematische Darstellung des Trainings des neuronalen Netzwerks nach dem Stand der Technik; und
- Figur 7: schematisch einen Ablauf zum Ermitteln und Klassifizieren des Objekts unter Verwendung des neuronalen Netzwerks nach dem Stand der Technik.

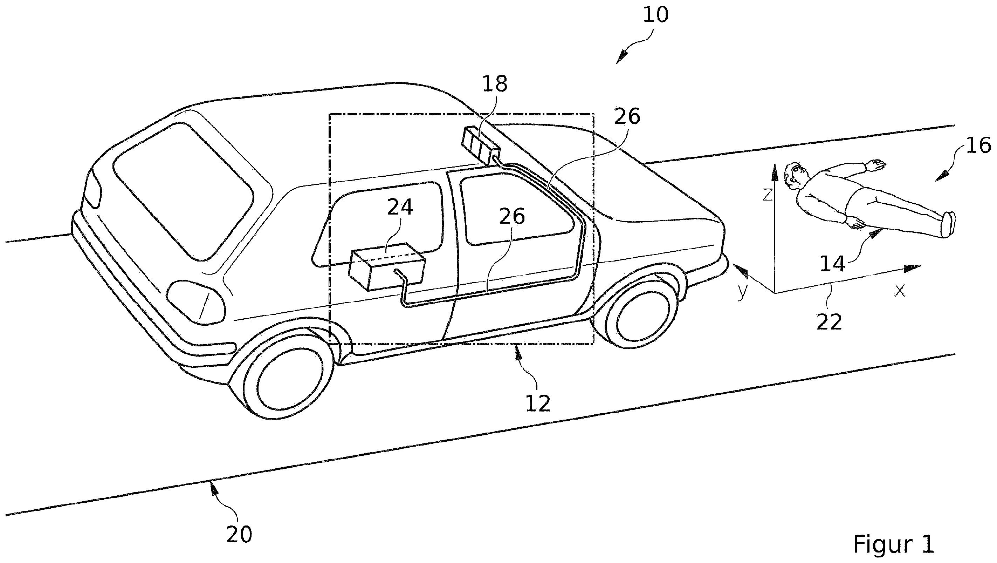

Figur 1 zeigt ein Fahrzeug 10 mit einer Vorrichtung 12 zum Ermitteln und Klassifizieren eines Objekts 14 in einem Erfassungsbereich 16 vor dem Fahrzeug 10 mittels eines Sensors 18 des Fahrzeugs 10. Das Fahrzeug 10 ist in dem gezeigten Ausführungsbeispiel als ein Personenkraftwagen ausgebildet, das sich auf einer Fahrbahn 20 befindet. Das zu ermittelnde und zu klassifizierende Objekt 14 ist in dem in Figur 1 gezeigten Ausführungsbeispiel eine Person auf der Fahrbahn 20. Alternativ kann das zu klassifizierende Objekt 14 beispielsweise auch ein weiteres Fahrzeug, ein Verkehrszeichen oder eine Fahrbahnmarkierung der Fahrbahn 20 in dem Erfassungsbereich 16 vor dem Fahrzeug 10 sein. Alternativ oder zusätzlich kann der Erfassungsbereich 16 hinter dem Fahrzeug 10 und/oder auf den Seiten des Fahrzeugs 10 sein.

Figur 1 zeigt ferner ein Koordinatenkreuz 22 eines ortsfesten Koordinatensystems. Eine erste Koordinatenachse X verläuft parallel zur Fahrbahn 20 und in Fahrtrichtung des Fahrzeugs 10. Eine zweite Koordinatenachse Y verläuft ebenfalls parallel zur Fahrbahn 20, ist senkrecht zur ersten Koordinatenachse X. Die zweite Koordinatenachse Y verläuft quer zur Fahrtrichtung des Fahrzeugs 10. Eine dritte Koordinatenachse Z zeigt nach oben und ist senkrecht zur von der ersten Koordinatenachse X und der zweiten Koordinatenachse Y aufgespannten Ebene.

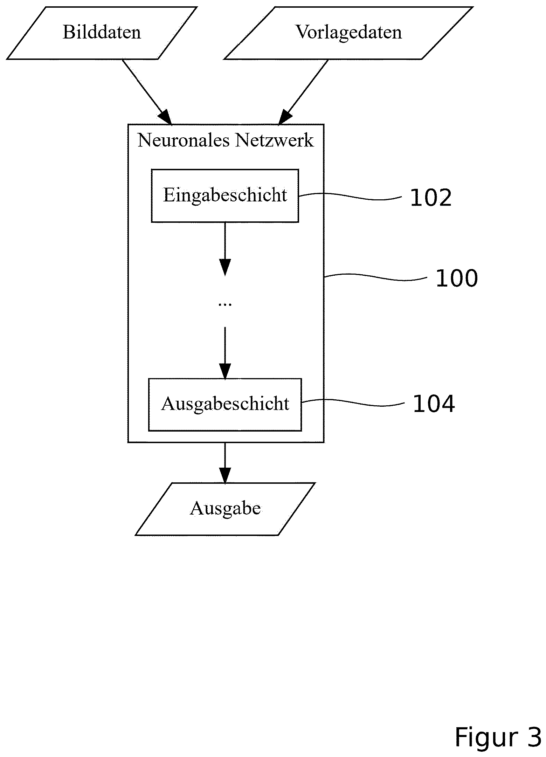

Die Vorrichtung 12 umfasst den Sensor 18, der fest mit dem Fahrzeug 10 verbunden ist. Der Sensor 18 ist in dem gezeigten Ausführungsbeispiel als eine Kamera ausgebildet. Alternativ kann der Sensor 18 auch ein Radar- oder Lidar-Sensor sein. Alternativ kann die Vorrichtung 12 mehrere Sensoren 18 umfassen, wie eine oder mehrere Kameras und/oder einen oder mehrere Lidar-Sensoren und/oder einen oder mehrere Radar-Sensoren. Die Kamera 18 ist derart in Fahrtrichtung des Fahrzeugs 10 bzw. in Richtung der ersten Koordinatenachse X ausgerichtet, dass sie einen Erfassungsbereich 16 auf der Fahrbahn 20 vor dem Fahrzeug 10 erfassen kann. Die Vorrichtung 12 umfasst ferner eine Bildverarbeitungs- und Auswerteeinheit 24, die über ein Kabel 26 mit der Kamera 18 verbunden ist. Alternativ kann sich die Bildverarbeitungs- und Auswerteeinheit 24 auch außerhalb des Fahrzeugs 10 befinden, zum Beispiel in einem externen Server. Die Bildverarbeitungs- und Auswerteeinheit 24 umfasst ein neuronales Netzwerk 100 (sie-he Figur 3) und ist ausgebildet, von der Kamera 18 erzeugte Bilddaten zu empfangen und zum Klassifizieren des Objekts 14 weiterzuverarbeiten. Das neuronale Netzwerk 100 wird im Folgenden anhand der Figuren 3 bis 5 noch näher beschrieben.

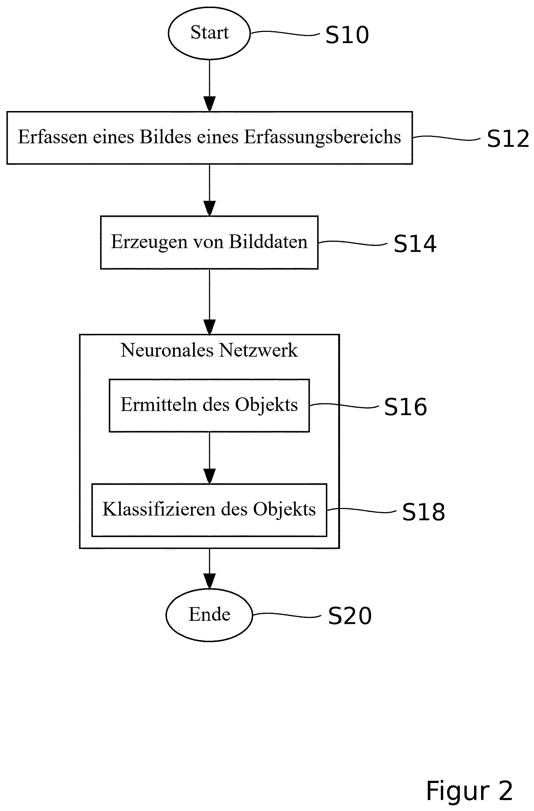

Figur 2 zeigt ein Flussdiagramm eines Ablaufs zum Ermitteln und Klassifizieren des Objekts 14 in dem Erfassungsbereich 16.

Im Schritt S10 wird der Ablauf gestartet. Danach wird im Schritt S12 durch den Sensor 18 ein zwei- oder dreidimensionales Bild des Erfassungsbereichs 16 erfasst. Als ein dreidimensionales Bild wird beispielsweise eine Höhenkarte des Erfassungsbereichs 16 oder eine Punktwolke des Erfassungsbereichs 16 erfasst. Im darauffolgenden Schritt S14 werden dem Bild entsprechende Bilddaten erzeugt. Diese Bilddaten werden von dem Sensor 18 an die Bildverarbeitungs- und Auswerteeinheit 24 übermittelt und dem neuronalen Netzwerk 100 als Eingabe eingegeben, das beispielsweise als ein Programm in der Bildverarbeitungs- und Auswerteeinheit 24 gespeichert ist. Alternativ übermittelt die Bildverarbeitungs- und Auswerteeinheit 24 die Bilddaten an einen entfernten Server oder ein dezentrales Netzwerk von Servern, eine sogenannte Cloud, wo das neuronale Netzwerk 100 beispielsweise als ein Programm gespeichert ist.

Im Schritt S16 ermittelt das neuronale Netzwerk 100 dann unter Verwendung der Bilddaten, ob eine Abbildung des zu klassifizierenden Objekts 14 in dem Bild vorhanden ist. Nachfolgend wird dann im Schritt S18 das Objekt 14 klassifiziert. Die Klassifikation erfolgt unter Verwendung der Bilddaten und von Vorlagedaten, die dem neuronalen Netzwerk 100 zusammen mit den Bilddaten eingegeben werden. Diese Vorlagedaten sind Sensordaten, die einem Bild eines Vorlageobjekts entsprechen. Das Vorlageobjekt ist zumindest einer Objektklasse zugeordnet. Bei dieser Objektklasse kann es sich beispielsweise handeln um: einem bestimmten Fahrzeugtyp, einen erwachsenen Fußgänger, ein Kind, einen Fahrradfahrer, ein bestimmtes Verkehrszeichen, eine Ampel, ein bestimmtes Hindernis oder eine bestimmte Gefahrenquelle. Das Objekt 14 wird klassifiziert, in dem das neuronale Netzwerk 100 entscheidet, ob das Objekt 14 der Objektklasse des Vorlageobjekts zuzuordnen ist oder nicht. Das Ergebnis dieser Entscheidung wird, beispielsweise als Wahr oder Falsch, durch das neuronale Netzwerk 100 ausgegeben.

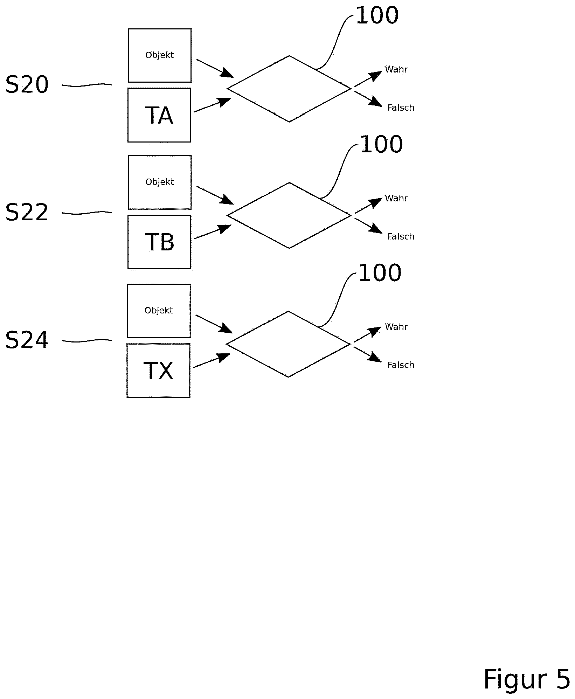

Die Schritte S16 und S18 können für eine Vielzahl von Vorlagedaten wiederholt werden, die jeweils Bildern von verschiedenen Vorlageobjekten entsprechen. Diese Vorlageobjekte sind jeweils verschiedenen Objektklassen zugeordnet. Auf diese Weise kann entschieden werden, ob das Objekt 14 einer dieser Objektklassen zuzuordnen ist oder nicht. Die Schritte S16 und S18 können dabei solange wiederholt werden bis das Objekt 14 einer der Objektklassen zuzuordnen ist. Alternativ können die Schritte S16 und S18 für alle Vorlagedaten wiederholt werden. Die Wiederholung der Schritte S16 und S18 ist weiter unten anhand der Figur 5 noch näher beschrieben. Schließlich wird der Ablauf in Schritt S20 beendet.

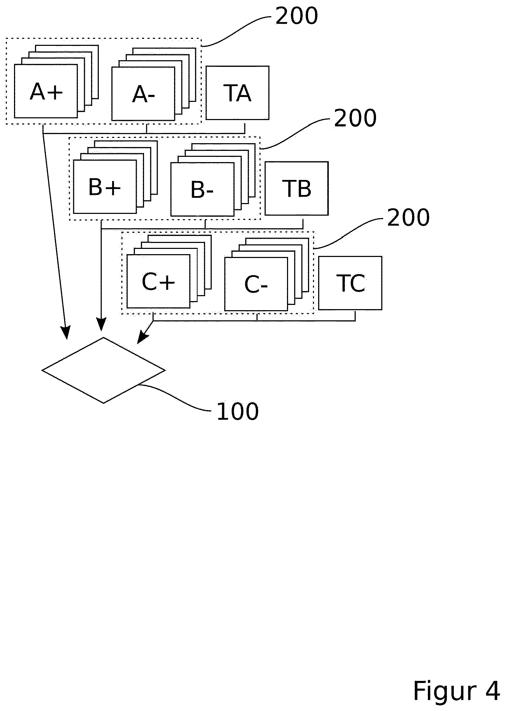

Bei den in dem vorliegenden Ausführungsbeispiel verwendeten Vorlagedaten handelt es sich um erste Vorlagedaten, d.h. Vorlagedaten, die bereits beim Training des neuronalen Netzwerks 100 als Eingabe verwendet worden sind, und/oder um zweite Vorlagedaten, d.h. Vorlagedaten, die nicht beim Training des neuronalen Netzwerks 100 als Eingabe verwendet worden sind. Das Training des neuronalen Netzwerks 100 wird im Folgenden in Verbindung mit Figur 4 noch näher beschrieben.

Figur 3 zeigt eine schematische Darstellung des neuronalen Netzwerks 100, das in den Schritten S16 und S18 nach Figur 2 zum Ermitteln und Klassifizieren des Objekts 14 verwendet wird. Das neuronale Netzwerk 100 umfasst mehrere Schichten (layers), zumindest jedoch eine Eingabeschicht 102 und eine Ausgabeschicht 104.

Dem neuronalen Netzwerk 100 werden die Bilddaten und die Vorlagedaten als Eingabe eingegeben. Die Bilddaten und die Vorlagedaten werden dann durch das neuronale Netzwerk 100 verarbeitet. Die Ausgabeschicht 104 gibt schließlich eine Ausgabe aus. Diese Ausgabe besteht insbesondere aus einer Konstante mit einem booleschen Datentyp, d.h. beispielsweise Wahr oder Falsch. Der Wert der Ausgabe hängt davon ab, ob das neuronale Netzwerk 100 das Objekt 14, dem die Bilddaten entsprechen, derselben Objektklasse zugeordnet hat wie das Vorlageobjekt, dem die Vorlagedaten entsprechen. Dem neuronalen Netzwerk 100 können auch Vorlagedaten eingegeben wer-den, die mehr als einem Vorlageobjekt entsprechen. Die Ausgabe des Netzwerks ist in diesem Fall beispielswese ein Vektor mit je einem Eintrag für jedes Vorlageobjekt.

Figur 4 zeigt eine schematische Darstellung des Trainings des neuronalen Netzwerks 100. Um das neuronale Netzwerk 100 zu trainieren, werden Trainingssensordaten 200 verwendet, die Bildern von weiteren Objekten 14 entsprechen. Einige der weiteren Objekte 14 sind zumindest einer der Objektklassen zugeordnet, d.h. die entsprechenden Bilder sind Positivbeispiele der Objektklasse. Die übrigen weiteren Objekte 14 sind keiner der Objektklassen zugeordnet, d.h. die entsprechenden Bilder sind Negativbeispiele der Objektklasse. Figur 4 zeigt beispielhaft Positivbeispiele, die mit A+, B+ und C+ bezeichnet sind, Negativbeispiele, die mit A-, B- und C- bezeichnet sind, und Vorlage-daten, die mit TA, TB und TC bezeichnet sind, von drei unterschiedlichen Objektklassen.

Dem neuronalen Netzwerk 100 werden die Positivbeispiele und die Negativbeispiele einer Objektklasse zusammen mit den der Objektklasse entsprechenden Vorlagedaten eingegeben. Abhängig von der Ausgabe des neuronalen Netzwerks 100 werden Para-meter des neuronalen Netzwerks 100 verändert. Parameter sind insbesondere Gewichte und Schwellenwerte von künstlichen Neuronen aus denen die Schichten des neuronalen Netzwerks 100 zusammengesetzt sind. Die Parameter des neuronalen Netzwerks 100 werden solange verändert, bis ein vorbestimmter Prozentsatz, beispielsweise 95% oder 99%, von Eingaben in das neuronale Netzwerk 100 die erwartete Ausgabe durch das neuronale Netzwerk 100 zu Folge hat.

Figur 5 zeigt schematisch einen Ablauf zum Ermitteln und Klassifizieren des Objekts 14 unter Verwendung des neuronalen Netzwerks 100 nach einer Ausführungsform.

Im ersten Wiederholungsschritt S20 werden dem neuronalen Netzwerk 100 die Bilddaten und erste Vorlagedaten TA eingegeben. Auf Basis der eigegebenen Daten entscheidet das neuronale Netzwerk 100, ob das zu identifizierende Objekt 14 der den ersten Vorlagedaten TA zugeordneten Objektklasse zuzuordnen ist. Im zweiten Wiederholungsschritt S22 werden dem neuronalen Netzwerk 100 die Bilddaten und weitere erste Vorlagedaten TB eingegeben, die einer weiteren Objektklasse entsprechen. Anhand der in Schritt S22 eigegebenen Daten entscheidet das neuronale Netzwerk 100 nun, ob das zu identifizierende Objekt 14 der den weiteren ersten Vorlagedaten TB zugeordneten weiteren Objektklasse zuzuordnen ist.

Im dritten Wiederholungsschritt S24 werden dem neuronalen Netzwerk 100 die Bilddaten und zweite Vorlagedaten TX eingegeben, d.h. Vorlagedaten, die mit denen das neuronale Netzwerk 100 in dem anhand von Figur 4 beschriebenen Training nicht trainiert wurde. Da das neuronale Netzwerk 100 darauf trainiert wurde, anhand von Vorlagedaten zu entscheiden, ob das Objekt 14 einer Objektklasse zuzuordnen ist, ist es in der Lage, auch für die zweiten Vorlagedaten TX zu entscheiden, ob das Objekt 14 der den zweiten Vorlagedaten TX zugeordneten Objektklasse zuzuordnen ist.

Anhand der Figuren 1 bis 5 sind das Verfahren und die Vorrichtung 12 anhand einer Ausführungsform beispielhaft beschrieben. Insbesondere erfolgt die Erfassung des Bilds mittels einer Kamera 18. Ferner befindet sich der Erfassungsbereich 16 dieser Kamera 18 in der gezeigten Ausführungsform vor dem Fahrzeug 10. Es versteht sich von selbst, dass die gezeigte Ausführungsform des Verfahrens entsprechend auch unter Verwendung anderer Sensoren, insbesondere von Radar- und Lidar-Sensoren, und/oder Kombinationen von den benannten Sensoren und/oder auf einen Bereich hinter dem Fahrzeug 10 und/oder auf den Seiten des Fahrzeug 10 anwendbar ist.

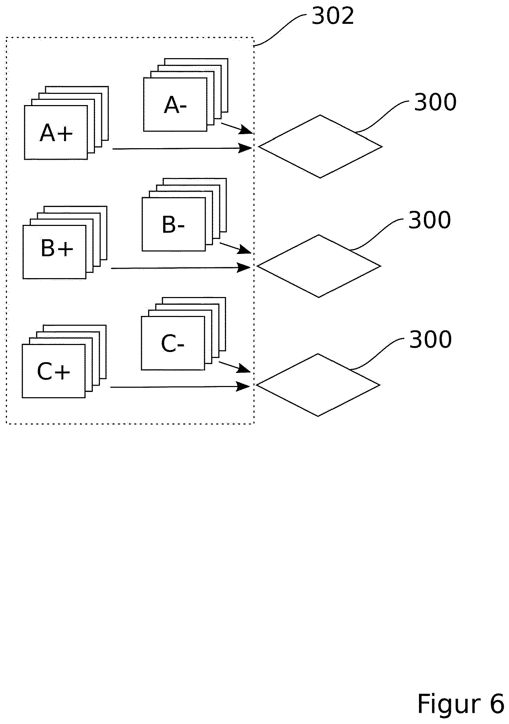

Figur 6 zeigt eine schematische Darstellung eines Trainings eines neuronalen Netzwerks 300 nach dem Stand der Technik. Für das Training werden Trainingssensordaten 302 verwendet, die Bildern von zu Objekten entsprechen. Einige der Objekte sind zumindest einer Objektklassen zugeordnet, d.h. die entsprechenden Bilder sind Positivbei-spiele der Objektklasse. Die übrigen Objekte sind keiner der Objektklassen zugeordnet, d.h. die entsprechenden Bilder sind Negativbeispiele der Objektklasse.

In einem Trainingsschritt wird das neuronale Netzwerk 300 darauf trainiert, Objekte einer ersten Objektklasse zu identifizieren. Hierzu werden dem neuronalen Netzwerk 300 die Positivbeispiele, in Figur 6 mit A+ bezeichnet, und die Negativbeispiele, in Figur 6 mit A- bezeichnet, der ersten Objektklasse eingegeben. Abhängig von der Ausgabe des neuronalen Netzwerks 300 werden Parameter des neuronalen Netzwerks 300 verändert. Der Trainingsschritt wird für eine zweite Objektklasse und eine dritte Objektklasse wiederholt. Hierzu werden dem neuronalen Netzwerk 300 die Positivbeispiele und die Negativbeispiele der beiden Objektklasse eingegeben, die in Figur 6 mit B+ und C+ bzw. B- und C- bezeichnet sind. Abhängig von der Ausgabe des neuronalen Netz-werks 300 werden erneut die Parameter des neuronalen Netzwerks 300 verändert. An-schließend ist das neuronale Netzwerk 300 darauf trainiert, Objekte zu identifizieren, die einer der drei Objektklassen angehören.

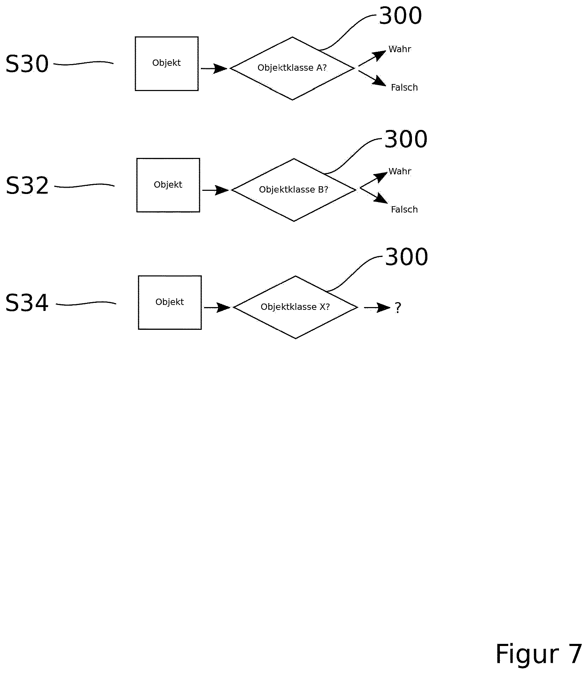

Figur 7 zeigt schematisch einen Ablauf zum Klassifizieren des Objekts unter Verwendung des neuronalen Netzwerks 300 nach dem Stand der Technik.

Im Schritt S30 werden dem neuronalen Netzwerk 300 Bilddaten eingegeben, die einem Bild des zu klassifizierenden Objekts entsprechen. Auf Basis der eigegebenen Daten entscheidet das neuronale Netzwerk 300, ob das zu identifizierende Objekt der ersten Objektklasse zuzuordnen ist. Im zweiten Schritt S32 entscheidet das neuronale Netzwerk 300 nun, ob das zu identifizierende Objekt der zweiten Objektklasse zuzuordnen ist. Im dritten Schritt S34 soll das neuronale Netzwerk 300 entscheiden, ob das Objekt einer Objektklasse angehört, anhand derer das neuronale Netzwerk 300 in dem an-hand von Figur 6 beschriebenen Training nicht trainiert wurde. Da das neuronale Netzwerk 300 nur darauf trainiert wurde zu entscheiden, ob das Objekt einer der drei ihm bekannten Objektklassen zuzuordnen ist, kann es keine Entscheidung treffen.

### Bezugszeichenliste

- 10: Fahrzeug
- 12: Vorrichtung
- 14: Objekt
- 16: Erfassungsbereich
- 18: Sensor
- 20: Fahrbahn
- 22: Koordinatenkreuz
- 24: Bildverarbeitungs- und Auswerteeinheit
- 26: Kabel
- 100: Neuronales Netzwerk
- 102: Eingabeschicht
- 104: Ausgabeschicht
- 200: Trainingssensordaten
- 300: Neuronales Netzwerk
- TA, TB, TC, TX: Vorlagedaten

## Patentansprüche

1. Verfahren zum Ermitteln und Klassifizieren wenigstens eines Objekts (14) in einem Erfassungsbereich (16) zumindest eines Sensors (18), bei dem mittels des zumindest einen Sensors (18) ein zwei- oder dreidimensionales Bild des Erfassungsbereichs (16) erfasst wird, wobei die dreidimensionalen Bilder als Punktwolke oder Höhenkarte verstanden werden,
dem Bild entsprechende Sensordaten erzeugt werden, und
mittels der Sensordaten und mittels erster Vorlagedaten zumindest eines ersten Vorlageobjekts unter Verwendung eines neuronalen Netzwerks (100) das Objekt (14) in dem Bild ermittelt werden,
wobei das neuronale Netzwerk (100) unter Verwendung der ersten Vorlagedaten trainiert worden ist, wobei hierzu dem neuronalen Netzwerk zumindest die ersten Vorlagedaten eingegeben werden, wobei die ersten Vorlagedaten einem Bild des ersten Vorlageobjekts entsprechen,
wobei dem ersten Vorlageobjekt zumindest eine erste Objektklasse zugeordnet ist, und
wobei das Objekt (14) klassifiziert wird, indem das neuronale Netzwerk (100) ermittelt, ob das Objekt (14) der ersten Objektklasse oder nicht der ersten Objektklasse zuzuordnen ist,
**dadurch gekennzeichnet, dass**
zum Ermitteln und Klassifizieren des Objekts in dem Erfassungsbereich dem trainierten neuronalen Netzwerk die Sensordaten und zusätzlich die ersten Vorlagedaten als eine Referenz für die erste Objektklasse eingegeben werden.

2. Verfahren nach Anspruch 1, wobei
mittels der Sensordaten und mittels zweiter Vorlagedaten eines zweiten Vorlageobjekts unter Verwendung eines neuronalen Netzwerks (100) das Objekt (14) in dem Bild ermittelt werden,
wobei die zweiten Vorlagedaten einem Bild des zweiten Vorlageobjekts entsprechen, dem zumindest eine zweite Objektklasse zugeordnet ist, und wobei das Objekt (14) klassifiziert wird, indem das neuronale Netzwerk (100) ermittelt, ob das Objekt (14) der zweiten Objektklasse zuzuordnen ist oder nicht der zweiten Objektklasse zuzuordnen ist.

3. Verfahren nach Anspruch 1 oder 2, wobei das neuronale Netzwerk (100) unter Verwendung der ersten Vorlagedaten und einer Vielzahl von Trainingssensordaten (200) trainiert worden ist, und wobei die Trainingssensordaten (200) Bildern von weiteren Objekten (14) entsprechen, die zumindest der ersten Objektklasse zugeordnet sind.

4. Verfahren nach einem der vorhergehenden Ansprüche, wobei jedem Vorlageobjekt genau eine der Objektklassen zugeordnet ist.

5. Verfahren nach einem der vorhergehenden Ansprüche, wobei keine Objektklasse mehr als einem Vorlageobjekt zugeordnet ist.

6. Verfahren nach einem der vorhergehenden Ansprüche, wobei mittels der Sensordaten und mittels der ersten Vorlagedaten oder der zweiten Vorlagedaten unter Verwendung des neuronalen Netzwerks (100) ein Bildbereich ermittelt wird, der ein Teilbereich des Bildes ist und eine Abbildung des Objekts (14) umfasst.

7. Verfahren nach einem der vorhergehenden Ansprüche, wobei der zumindest eine Sensor (18) eine Kamera, insbesondere eine Monokamera, ein Lidar-Sensor oder ein Radar-Sensor ist.

8. Verfahren nach einem der vorhergehenden Ansprüche, wobei der zumindest eine Sensor (18) ein Sensor (18) eines Fahrzeugs (10), insbesondere eines Straßenfahrzeugs, ist.

9. Verfahren nach Anspruch 8, wobei die dem zu klassifizierenden Objekt (14) zugeordnete Objektklasse als Eingabe für ein Fahrassistenzsystem oder eine Steuereinheit zum autonomen Steuern des Fahrzeugs (10) verwendet wird.

10. Verfahren nach Anspruch 8 oder 9, wobei mittels der Bilddaten und der dem zu klassifizierenden Objekt (14) zugeordneten Objektklasse die Position des Objekts (14) relativ zu dem Fahrzeug (10) ermittelt wird.

11. Vorrichtung (12) zum Ermitteln und Klassifizieren wenigstens eines Objekts (14) in einem Erfassungsbereich (16) zumindest eines Sensors (18),
wobei der Sensor (18) ausgebildet ist, ein zwei- oder dreidimensionales Bild des Erfassungsbereichs (16) zu erfassen, wobei die dreidimensionalen Bilder als Punktwolke oder Höhenkarte verstanden werden,
mit einer Bildverarbeitungs- und Auswerteeinheit (24), die ausgebildet ist,
dem Bild entsprechende Sensordaten zu erzeugen, und
mittels der Sensordaten und mittels erster Vorlagedaten zumindest eines ersten Vorlageobjekts unter Verwendung eines neuronalen Netzwerks (100) das Objekt (14) in dem Bild zu ermitteln,
wobei das neuronale Netzwerk (100) unter Verwendung der ersten Vorlagedaten trainiert worden ist, wobei hierzu dem neuronalen Netzwerk zumindest die ersten Vorlagedaten eingegeben wurden,
wobei die ersten Vorlagedaten einem Bild des ersten Vorlageobjekts entsprechen,
wobei dem ersten Vorlageobjekt zumindest eine erste Objektklasse zugeordnet ist, und
wobei das Objekt (14) klassifiziert wird, indem das neuronale Netzwerk (100) ermittelt, ob das Objekt (14) der ersten Objektklasse oder nicht der ersten Objektklasse zuzuordnen ist,
**dadurch gekennzeichnet, dass**
zum Ermitteln und Klassifizieren des Objekts in dem Erfassungsbereich dem trainierten neuronalen Netzwerk die Sensordaten und zusätzlich die ersten Vorlagedaten als eine Referenz für die erste Objektklasse eingegeben werden.

12. Vorrichtung (12) nach Anspruch 11, wobei der Sensor (18) eine Kamera, insbesondere eine Monokamera, ein Lidar-Sensor oder ein Radar-Sensor ist.

13. Vorrichtung (12) nach Anspruch 11 oder 12, wobei der Sensor (18) fest mit einem Fahrzeug (10), insbesondere einem Straßenfahrzeug (10), verbunden ist.

## Claims

1. A method for detecting and classifying at least one object (14) in a detection area (16) of at least one sensor (18), in which
the at least one sensor (18) is used to capture a two- or three-dimensional image of the detection area (16), wherein the three-dimensional images are understood as a point cloud or elevation map,
sensor data corresponding to the image are generated, and
by use of the sensor data and first reference data of at least one first reference object, the object (14) in the image is detected, using a neural network (100),
wherein the neural network (100) has been trained using the first reference data, wherein for this purpose at least the first reference data are input to the neural network, wherein the first reference data correspond to an image of the first reference object,
wherein at least one first object class is assigned to the first reference object, and
wherein the object (14) is classified in that the neural network (100) determines whether the object (14) is to be assigned to the first object class or is not to be assigned to the first object class,
**characterized in that**
for detecting and classifying the object in the detection area, the sensor data and additionally the first reference data, as a reference for the first object class, are input to the trained neural network.

2. The method according to claim 1, wherein
by use of the sensor data and second reference data of a second reference object, the object (14) in the image is detected, using a neural network (100),
wherein the second reference data correspond to an image of the second reference object to which at least one second object class is assigned, and wherein the object (14) is classified in that the neural network (100) determines whether the object (14) is to be assigned to the second object class or is not to be assigned to the second object class.

3. The method according to claim 1 or 2, wherein the neural network (100) has been trained using the first reference data and a plurality of training sensor data (200), and wherein the training sensor data (200) correspond to images of further objects (14) that are assigned at least to the first object class.

4. The method according to one of the preceding claims, wherein exactly one of the object classes is assigned to each reference object.

5. The method according to one of the preceding claims, wherein no object class is assigned to more than one reference object.

6. The method according to one of the preceding claims, wherein by use of the sensor data and the first reference data or the second reference data, using the neural network (100), an image area is determined which is a subarea of the image and which includes a depiction of the object (14).

7. The method according to one of the preceding claims, wherein the at least one sensor (18) is a camera, in particular a mono camera, or a lidar sensor or a radar sensor.

8. The method according to one of the preceding claims, wherein the at least one sensor (18) is a sensor (18) of a vehicle (10), in particular a road vehicle.

9. The method according to claim 8, wherein the object class assigned to the object (14) to be classified is used as input for a driving assistance system or a control unit for automatically controlling the vehicle (10).

10. The method according to claim 8 or 9, wherein the position of the object (14) relative to the vehicle (10) is determined using the image data and the object class assigned to the object (14) to be classified.

11. A device (12) for detecting and classifying at least one object (14) in a detection area (16) of at least one sensor (18),
wherein the sensor (18) is designed to capture a two- or three-dimensional image of the detection area (16), wherein the three-dimensional images are understood as a point cloud or elevation map,
with an image processing and evaluation unit (24) that is designed
to generate sensor data corresponding to the image, and
by use of the sensor data and first reference data of at least one first reference object, to detect the object (14) in the image, using a neural network (100),
wherein the neural network (100) has been trained using the first reference data, wherein for this purpose at least the first reference data are input to the neural network,
wherein the first reference data correspond to an image of the first reference object, wherein at least one first object class is assigned to the first reference object, and
wherein the object (14) is classified in that the neural network (100) determines whether the object (14) is to be assigned to the first object class or is not to be assigned to the first object class,
**characterized in that**
for detecting and classifying the object in the detection area, the sensor data and additionally the first reference data, as a reference for the first object class, are input to the trained neural network.

12. The device (12) according to claim 11, wherein the sensor (18) is a camera, in particular a mono camera, or a lidar sensor or a radar sensor.

13. The device (12) according to claim 11 or 12, wherein the sensor (18) is fixedly connected to a vehicle (10), in particular a road vehicle (10).

## Revendications

1. Procédé de reconnaissance et de classification d'au moins un objet (14) dans une zone de détection (16) d'au moins un capteur (18), par lequel une image bidimensionnelle ou tridimensionnelle de la zone de détection (16) est acquise au moyen de l'au moins un capteur (18), dans lequel les images tridimensionnelles sont comprises comme un nuage de points ou une carte altimétrique,
des données de capteur correspondant à l'image sont générées, et
l'objet (14) dans l'image est reconnu au moyen des données de capteur et au moyen de premières données de modèle d'au moins un premier modèle d'objet, en utilisant un réseau neuronal (100),
dans lequel le réseau neuronal (100) a été entraîné en utilisant les premières données de modèle, dans lequel au moins les premières données de modèle sont appliquées en entrée à cet effet dans le réseau neuronal, dans lequel les premières données de modèle correspondent à une image du premier modèle d'objet,
dans lequel au moins une première classe d'objets est associée au premier modèle d'objet, et
dans lequel l'objet (14) est classé après que le réseau neuronal (100) détermine si l'objet (14) doit être associé à la première classe d'objets ou ne pas être associé à la première classe d'objets,
**caractérisé en ce que**
pour déterminer et classer l'objet dans la zone de détection, les données de capteur et, en outre, les premières données de modèle sont appliquées en entrée dans le réseau neuronal entraîné en tant que référence pour la première classe d'objets.

2. Procédé selon la revendication 1, dans lequel
l'objet (14) dans l'image est reconnu au moyen des données de capteur et au moyen de secondes données de modèle d'un second modèle d'objet, en utilisant un réseau neuronal (100),
dans lequel les secondes données de modèle correspondent à une image du second modèle d'objet, auquel est associée au moins une seconde classe d'objets, et dans lequel l'objet (14) est classé après que le réseau neuronal (100) détermine si l'objet (14) doit être associé à la seconde classe d'objets ou ne pas être associé à la seconde classe d'objets.

3. Procédé selon la revendication 1 ou 2, dans lequel le réseau neuronal (100) a été entraîné en utilisant les premières données de modèle et une pluralité de données (200) de capteur d'apprentissage, et dans lequel les données (200) de capteur d'apprentissage correspondent à des images d'autres objets (14) associés au moins à la première classe d'objets.

4. Procédé selon l'une des revendications précédentes, dans lequel exactement une des classes d'objets est associée à chaque modèle d'objet.

5. Procédé selon l'une des revendications précédentes, dans lequel aucune classe d'objets n'est associée à plus d'un objet modèle.

6. Procédé selon l'une des revendications précédentes, dans lequel, au moyen des données de capteur et au moyen des premières données de modèle ou des secondes données de modèle, une zone d'image qui est une zone partielle de l'image et qui comprend une représentation de l'objet (14), est déterminée en utilisant le réseau neuronal (100).

7. Procédé selon l'une des revendications précédentes, dans lequel l'au moins un capteur (18) est une caméra, en particulier une caméra mono, un capteur lidar ou un capteur radar.

8. Procédé selon l'une des revendications précédentes, dans lequel l'au moins un capteur (18) est un capteur (18) d'un véhicule (10), en particulier d'un véhicule routier.

9. Procédé selon la revendication 8, dans lequel la classe d'objets associée à l'objet (14) à classer est utilisée comme entrée pour un système d'aide à la conduite ou une unité de commande destinée à la conduite autonome du véhicule (10).

10. Procédé selon la revendication 8 ou 9, dans lequel la position de l'objet (14) par rapport au véhicule (10) est déterminée au moyen des données d'image et de la classe d'objets associée à l'objet (14) à classer.

11. Dispositif (12) de reconnaissance et de classification d'au moins un objet (14) dans une zone de détection (16) d'au moins un capteur (18),
dans lequel le capteur (18) est conçu pour acquérir une image bidimensionnelle ou tridimensionnelle de la zone de détection (16), dans lequel les images tridimensionnelles sont comprises comme un nuage de points ou une carte altimétrique,
comprenant une unité (24) de traitement et d'analyse d'images conçue pour générer des données de capteur correspondant à l'image, et
reconnaître l'objet (14) dans l'image au moyen des données de capteur et au moyen de premières données de modèle d'au moins un premier modèle d'objet, en utilisant un réseau neuronal (100),
dans lequel le réseau neuronal (100) a été entraîné en utilisant les premières données de modèle, au moins les premières données de modèle ayant été appliquées en entrée à cet effet dans le réseau neuronal,
dans lequel les premières données de modèle correspondent à une image du premier modèle d'objet,
dans lequel au moins une première classe d'objets est associée au premier modèle d'objet, et
dans lequel l'objet (14) est classé après que le réseau neuronal (100) détermine si l'objet (14) doit être associé à la première classe d'objets ou ne pas être associé à la première classe d'objets,
**caractérisé en ce que**
pour déterminer et classer l'objet dans la zone de détection, les données de capteur et, en outre, les premières données de modèle sont appliquées en entrée dans le réseau neuronal entraîné en tant que référence pour la première classe d'objets.

12. Dispositif (12) selon la revendication 11, dans lequel le capteur (18) est une caméra, en particulier une caméra mono, un capteur lidar ou un capteur radar.

13. Dispositif (12) selon la revendication 11 ou 12, dans lequel le capteur (18) est fixé de manière solidaire à un véhicule (10), en particulier à un véhicule routier (10).
